# EUROPEAN PATENT APPLICATION

(11) **EP 4 269 466 A1**
(43) Date of publication of application: **01.11.2023**
(21) Application number: 22170581.7
(22) Date of filing: 28.04.2022
(51) Int. Cl.: C08G 63/82, C08G 63/88, C08G 63/90, C08G 63/08

(54) **A PLANT AND AN EFFICIENT PROCESS FOR PRODUCING POLYLACTIC ACID**

(71) Applicant: Sulzer Management AG, 8401 Winterthur (CH)
(72) Inventor: The designation of the inventor has not yet been filed
(74) Representative: Henkel & Partner mbB

(57) **Abstract**

A process of producing polylactic acid comprising the steps of:
a) providing a crude lactide composition comprising meso-lactide and at least one of L-lactide and D-lactide,
b) separating from the crude lactide composition a meso-lactide enriched composition and a meso-lactide depleted composition, wherein the meso-lactide enriched composition contains less than 80 mol-% of meso-lactide based on the total content of lactide,
c) polymerizing a polymerization composition comprising meso-lactide and at least one of L-lactide and D-lactide to a crude polylactic acid composition and optionally devolatilizing the crude polylactic acid composition so as to produce a purified polylactic acid composition and a composition containing unreacted lactide,
d) subjecting the meso-lactide enriched composition or a mixture of the meso-lactide enriched composition and a portion of the composition containing unreacted lactide to a purification comprising at least one crystallization step so as to produce a purified meso-lactide enriched composition,
e) subjecting the meso-lactide depleted composition or a mixture of the meso-lactide depleted composition and a portion of the composition containing unreacted lactide to a purification comprising at least one crystallization step so as to produce a purified meso-lactide depleted composition,
wherein the polymerization composition contains at least a portion of the purified meso-lactide enriched composition produced in step d) and/or at least a portion of the purified meso-lactide depleted composition produced in step e).

## Description

The present invention relates to a process and to a plant for producing and preferably for continuously producing polylactic acid from lactide.

Polymers of lactic acid are of particular interest, because they can be obtained from renewable resources and are mostly compostable and/or biodegradable. Moreover, the technological and physiochemical properties of these polymers come quite close to the properties of those polymers derived from fossil-based resources, which explains why these polymers are regarded as highly promising substitutes for the latter. Furthermore, polymers of lactic acid have a wide range of applications. For instance, polylactic acid is used in the biomedical field in chirurgical implants, in films, such as e.g. in packagings, in fibers, such as e.g. for garments, in hygienic articles, in carpets and in disposable plastic products, such as e.g. disposable cutlery or containers. In addition, polylactic acid has found wide application in composite materials, such as in fiber-reinforced plastics.

Generally, two alternative principal methods are known for synthesizing polylactic acid. The first principal method is the direct polycondensation of lactic acid to polylactic acid. However, this principal method only leads to low molecular weight polymers and is thus limited to specific polymers.

The second principal method known for synthesizing polylactic acid is the ring-opening-polymerization of lactide, which is the cyclic diester of lactic acid. This is the preferred method nowadays for the industrial production of polylactic acid. The lactide may be produced by condensation of two lactic acid molecules. Alternatively, the lactide may be produced by first prepolymerizing lactic acid and then subjecting the oligomer or prepolymer, respectively, to a depolymerization reaction. For instance, the lactide is prepared by fermentation of carbohydrates from biomass, such as starch, sugar or corn resulting in lactic acid, by then prepolymerizing the lactic acid and by afterwards subjecting the oligomers to the depolymerization reaction. The depolymerization reaction of the lactic acid oligomer to lactide is an equilibrium reaction. In order to push the reaction towards the lactide, lactide must be withdrawn from the system. In a continuous depolymerization, in which the lactic acid oligomer is fed continuously to a reactor, crude lactide is evaporated under vacuum. The synthesis reactor is preferably a distillation column, in which the synthesis mainly takes place in the sump of the distillation column, but also in other sections where lactide composition is not in equilibrium with lactic acid oligomers. The depolymerization reactor produces a crude lactide stream that contains the lactide and lactic acid, lactic acid oligomers and other impurities. This crude lactide stream is usually purified and the purified lactide is then polymerized in the presence of a catalyst and optionally an initiator to form a crude polylactic acid composition, such as a crude high molecular weight polylactic acid composition. After the polymerization, the unreacted lactide has to be removed from the crude polylactic acid composition to a final concentration of less than at least 0.5 % by weight, in order to obtain a product of marketable quality. The removal of unreacted lactide as well as of other low-boiling components of the crude polylactic acid composition is usually done by devolatilization. More specifically, the crude polylactic acid composition is subjected to one or more devolatilization steps, which are conducted at an elevated temperature and at a reduced pressure. During the devolatilization, the unreacted lactide as well as other low-boiling and close-boiling components of lactide, components formed as side-products with the polymerization in the polylactic acid reactor are removed as vapor fraction from the polylactic acid so as to obtain a vapor composition including the unreacted lactide and a liquid fraction including purified polylactic acid melt. The vapor composition including the unreacted lactide is then condensed and may be recycled into the polymerization reaction.

Lactic acid is chiral and exists in the form of enantiomeric L-lactic acid and D-lactic acid, which are also called S-lactic acid and R-lactic acid, respectively. Therefore, the dimer of lactic acid, i.e. lactide, exists in the form of three stereoisomers, namely as L-lactide (or S,S-lactide, respectively), as D-lactide (or R,R-lactide, respectively) and as meso-lactide (or S,R-lactide, respectively). The properties of the polylactic acid, such as the processing properties, crystallization properties and degradation behavior of polylactic acid, depend on the structure and composition of the polymer chains, in particular on the ratio of the L- to the D-stereoisomer of lactic acid. The stereochemical structure of polylactic acid can be modified by copolymerization of mixtures of L-lactide, meso-lactide and D-lactide resulting in high molecular weight amorphous or semicrystalline polymers with a melting point in the range from 130 to 185°C. Furthermore, homopolymers may be produced consisting only of L-lactic acid or of D-lactic acid monomers. For instance, isotactic polylactic acid homopolymer, which comprises only L-lactic acid monomer, is a semicrystalline material with a highest melting point, whereas polylactic acid copolymers comprising L-lactic acid and D-lactic acid monomers with a comparable high D-stereoisomer content exhibit lower melting points and slower crystallization behavior. Therefore, processes are desirable, in which polylactic acid with a predetermined stereoisomeric structure may be easily and reliably produced from lactide.

In view of this, the object underlying the present invention is to provide a process for producing polylactic acid, which first produces ultra-pure lactide with a high stereochemical purity, namely a composition of meso-lactide and a composition of L-lactide and/or D-lactide, wherein one or both of these lactide compositions are then polymerized to polylactic acid having a predetermined ratio of the two stereoisomers of lactic acid. Moreover, the process should be flexible so that it may be easily changed concerning the ratio of the three stereoisomers of lactide being fed into the polymerization reactor so that for instance the production of a first specific polylactic acid with a first ratio of D- and L-lactide may be fast and easily changed to the production of a second specific polylactic acid with a second ratio of D- and L-lactide.

In accordance with the present invention this object is satisfied by providing a process of producing polylactic acid comprising the steps of:
a) providing a crude lactide composition comprising meso-lactide and at least one of L-lactide and D-lactide,
b) separating from the crude lactide composition a meso-lactide enriched composition and a meso-lactide depleted composition, wherein the meso-lactide enriched composition contains less than 80 mol-% of meso-lactide based on the total content of lactide,
c) polymerizing a polymerization composition comprising meso-lactide and at least one of L-lactide and D-lactide to a crude polylactic acid composition and optionally devolatilizing the crude polylactic acid composition so as to produce a purified polylactic acid composition and a composition containing unreacted lactide,
d) subjecting the meso-lactide enriched composition or a mixture of the meso-lactide enriched composition and a portion of the composition containing unreacted lactide to a purification comprising at least one crystallization step so as to produce a purified meso-lactide enriched composition,
e) subjecting the meso-lactide depleted composition or a mixture of the meso-lactide depleted composition and a portion of the composition containing unreacted lactide to a purification comprising at least one crystallization step so as to produce a purified meso-lactide depleted composition,
wherein the polymerization composition contains at least a portion of the purified meso-lactide enriched composition produced in step d) and/or at least a portion of the purified meso-lactide depleted composition produced in step e).

By the aforementioned process steps not only polylactic acid with a high stereochemical purity may be produced with a predetermined ratio of the lactic acid stereoisomers, but the process is also flexible so that it may be easily changed concerning the ratio of the three stereoisomers of lactide being fed into the polymerization reactor so that for instance the production of a first specific polylactic acid with a first ratio of D- and L-lactide may be fast and easily changed to the production of a second specific polylactic acid with a second ratio of D- and L-lactide. A further advantage of the process in accordance with the present invention is that the lactide stereoisomers being fed into the polymerization reactor are - due to the crystallization steps performed during the process - ultra-pure, i.e. the lactide is at least essentially free of hydroxylic (including hydroxycarboxylic) impurities, such as water, lactic acid and other impurities, since such impurities prevent attainment of desired molecular weights. With low content of water, of lactic acid and of other impurities, very pure polylactic acid with the predetermined stereoisomeric purity may be reliably produced. It is preferred that the acid content of the lactide is, for example, less than 20 milliequivalents per kilogram (meq/kg), more preferably not more than 15 meq/kg, even more preferably not more than 10 meq/kg, still more preferably not more than 5 meq/kg and most preferably less than 2 meq/kg. It is particularly advantageous that in accordance with the present invention the separation step b) is conducted so that the meso-lactide enriched composition contains less than 80 mol-% of meso-lactide based on the total content of lactide of the meso-lactide enriched composition. Thereby, the separation in step b), which typically comprises one or more distillation steps, may be performed with a comparable low energy consumption with comparable small separation devices, such as comparable small distillation columns. Moreover, it allows a shorter residence time of the crude lactide composition in the separation devices, such as distillation columns, and milder separation conditions, such as milder distillation conditions in terms of reduced temperature, which in turn leads to less formation of undesired by-products during the separation step b), such as of 4-hydroxy-5-methyl-4-cyclopentene-1,3-dione (HMCP). This is an important advantage, because HMCP, which is formed during the distillation at higher temperatures, is an impurity leading in polylactic acid to yellowness and is thus a particular critical impurity for polylactic acid. Since HMCP has only a slightly higher volatility relative to meso-lactide, it cannot be separated from the meso-lactide during the distillation. However, apart from leading due to the possible milder separation conditions to a reduced formation of HCMP, the process in accordance with the present invention further reliably removes the formed HCMP as well as other impurities having a boiling point close to that of meso-lactide from the meso-lactide enriched composition during the crystallization step d). Furthermore, the crystallization step e) assures that the meso-lactide depleted composition has a particular high purity and contains, if at all, small traces of impurities. For instance, the meso-lactide depleted composition may have a low free acid content, such as of less than 2 meq/kg. Such a low free acid content of less than 2 meq/kg may be also achieved for the polymerization composition, even if it contains at least a portion of the purified meso-lactide enriched composition produced in step d) and at least a portion of the purified meso-lactide depleted composition produced in step e). Therefore, the produced lactide compositions and in particular the produced purified meso-lactide enriched composition has a very high thermal stability, which allows to store the portions of the lactide compositions as liquid or solid material (i.e. of the purified meso-lactide enriched composition and of the purified meso-lactide depleted composition), which are not required for the polymerization step, for several months without deterioration.

Meso-lactide enriched composition means in accordance with the present invention that the respective composition produced during the separation step b) has a higher content of meso-lactide than the crude lactide composition fed into the separation step b). Analogous thereto, meso-lactide depleted composition means in accordance with the present invention that the respective composition produced during the separation step b) has a lower content of meso-lactide than the crude lactide composition fed into the separation step b).

In accordance with the present invention, in step d) either the meso-lactide enriched composition produced in step b) or a mixture of the meso-lactide enriched composition and a portion of the composition containing unreacted lactide obtained in the optional devolatilization step of the polylactic acid is subjected to a purification comprising at least one crystallization step. Likewise, in step e) either the meso-lactide depleted composition produced in step b) or a mixture of the meso-lactide depleted composition and a portion of the composition containing unreacted lactide obtained in the optional devolatilization step of the polylactic acid is subjected to a purification comprising at least one crystallization step. This covers all four possible combinations thereof, namely i) that in step d) the meso-lactide enriched composition (i.e. without being in admixture with a portion of the composition containing unreacted lactide obtained in the optional devolatilization step) and in step e) the meso-lactide depleted composition (i.e. without being in admixture with a portion of the composition containing unreacted lactide obtained in the optional devolatilization step) are subjected to the crystallization comprising purification, ii) that in step d) a mixture of the meso-lactide enriched composition and a portion of the composition containing unreacted lactide obtained in the optional devolatilization step of the polylactic acid and in step e) the meso-lactide depleted composition (i.e. without being in admixture with a portion of the composition containing unreacted lactide obtained in the optional devolatilization step) are subjected to the crystallization comprising purification, iii) that in step d) the meso-lactide enriched composition (i.e. without being in admixture with a portion of the composition containing unreacted lactide obtained in the optional devolatilization step) and in step e) a mixture of the meso-lactide depleted composition and a portion of the composition containing unreacted lactide obtained in the optional devolatilization step of the polylactic acid composition are subjected to the crystallization comprising purification and iv) that in step d) a mixture of the meso-lactide enriched composition and a portion of the composition containing unreacted lactide obtained in the optional devolatilization step of the polylactic acid and in step e) a mixture of the meso-lactide depleted composition and a portion of the composition containing unreacted lactide obtained in the optional devolatilization step of the polylactic acid composition are subjected to the crystallization comprising purification. Independent from whether a portion of the composition containing unreacted lactide obtained in the optional devolatilization step is added to the meso-lactide enriched composition and/or to the meso-lactide depleted composition before the purification with crystallization, the respectively purified or crystallized, respectively, compositions are called herein as purified meso-lactide enriched composition and as purified meso-lactide depleted composition, respectively. If a portion of the composition containing unreacted lactide obtained in the optional devolatilization step of the polylactic acid composition is added before the purification to the meso-lactide enriched composition or to the meso-lactide depleted composition, it is preferred that the mixture of the composition containing unreacted lactide and of the meso-lactide enriched or of the meso-lactide enriched composition contains 1 to 40% by weight and preferably 5 to 15% by weight of the lactide of the composition containing unreacted lactide obtained in the optional devolatilization step based on the total weight of the lactide contained in the mixture.

Furthermore, in accordance with the present invention in step c) a polymerization composition is used, which contains at least a portion of the purified meso-lactide enriched composition produced in step d) and/or at least a portion of the purified meso-lactide depleted composition produced in step e). Thus, during the polymerization only all or a portion of the purified meso-lactide enriched composition produced in step d) may be polymerized, or only all or a portion of the purified meso-lactide depleted composition produced in step d) may be polymerized, or a mixture of firstly all or a portion of the purified meso-lactide enriched composition produced in step d) and secondly all or a portion of the purified meso-lactide enriched composition produced in step d) may be polymerized. In addition, even if less preferred, this comprises also the embodiment that a mixture of all or a portion of the purified meso-lactide enriched composition produced in step d) (which may contain lactide from the composition containing unreacted lactide obtained in the optional devolatilization step, as set out above) and a portion of the composition containing unreacted lactide obtained in the optional devolatilization step (which may or may not be purified before polymerization and which is added to the already purified meso-lactide enriched composition, i.e. after the purification comprising at least one crystallization step) are polymerized in step c). Also, even if less preferred, this comprises also the embodiment that a mixture of all or a portion of the purified meso-lactide depleted composition produced in step d) and a portion of the composition containing unreacted lactide obtained in the optional devolatilization step (which may or may not be purified before polymerization and which is added to the already purified meso-lactide enriched composition, i.e. after the purification comprising at least one crystallization step) are polymerized in step c) as well as the embodiment that a mixture of all or a portion of the purified meso-lactide enriched composition produced in step d), of all or a portion of the purified meso-lactide depleted composition produced in step d) and of a portion of the composition containing unreacted lactide obtained in the optional devolatilization step (which may or may not be purified before polymerization and which is added to the already purified meso-lactide enriched composition, i.e. after the purification comprising at least one crystallization step) are polymerized in step c). The polymerization composition may also include, even if less preferred, further lactide from other sources. However, it is preferred that the polymerization composition used in step c) comprises at least 60% by weight, preferably at least 80% by weight, more preferably at least 90% by weight, even more preferably at least 95% by weight, still more preferably at least 98% by weight, still more preferably at least 99% by weight and most preferably at least 100% by weight of lactide from the purified meso-lactide enriched composition and of the purified meso-lactide depleted composition based on the total weight of the lactide contained in the polymerization composition. In addition to the lactide, the polymerization composition may contain and preferably in fact contains non-lactide components being helpful or necessary for the polymerization reaction, such as one or more catalysts, one or more initiators or the like.

In accordance with a first particular preferred embodiment of the present invention, in step d) the meso-lactide enriched composition (i.e. without being in admixture with a portion of the composition containing unreacted lactide obtained in the optional devolatilization step) is subjected to a purification comprising at least one crystallization step so as to produce a purified meso-lactide enriched composition, wherein in step e) the meso-lactide depleted composition (i.e. without being in admixture with a portion of the composition containing unreacted lactide obtained in the optional devolatilization step) is subjected to a purification comprising at least one crystallization step so as to produce the purified meso-lactide depleted composition, and wherein the polymerization composition contains at least a portion the purified meso-lactide enriched composition produced in step d) and at least a portion the purified meso-lactide depleted composition produced in step e). Preferably, the polymerization composition does not contain more than 20% by weight, more preferably not more than 10% by weight, even more preferably not more than 2% by weight, still more preferably not more than 1% by weight and most preferably no further lactide in addition to that resulting from the purified meso-lactide enriched composition and that from the purified meso-lactide depleted composition. The ratio of the purified meso-lactide enriched composition and of the purified meso-lactide depleted composition in the polymerization composition may be 10:1 to 1:10 by weight, such as 5:1 to 1:1 by weight. The polymerization reaction may comprise all of the purified meso-lactide enriched composition produced in step d) or a portion of the purified meso-lactide enriched composition produced in step d), such as 10 to 60% by weight thereof. Likewise thereto, the polymerization reaction may comprise all of the purified meso-lactide depleted composition produced in step d) or a portion of the purified meso-lactide depleted composition produced in step d), such as 10 to 60% by weight thereof.

In accordance with a second particular preferred embodiment of the present invention, in step d) a mixture of the meso-lactide enriched composition and of a portion of the composition containing unreacted lactide produced in the devolatilization is subjected to a purification comprising at least one crystallization step so as to produce the purified meso-lactide enriched composition, wherein in step e) the meso-lactide depleted composition (i.e. without being in admixture with a portion of the composition containing unreacted lactide obtained in the optional devolatilization step) is subjected to a purification comprising at least one crystallization step so as to produce a purified meso-lactide depleted composition, and wherein the polymerization composition contains at least a portion of the purified meso-lactide enriched composition. Preferably, the polymerization composition does not contain more than 20% by weight, more preferably not more than 10% by weight, even more preferably not more than 2% by weight, still more preferably not more than 1% by weight and most preferably no further lactide in addition to that resulting from the purified meso-lactide enriched composition and that from the purified meso-lactide depleted composition. The ratio of the purified meso-lactide enriched composition and of the purified meso-lactide depleted composition in the polymerization composition may be 10:1 to 1:10 by weight, such as 5:1 to 1:1 by weight. However, it is preferred in this embodiment that at least 80% by weight, more preferably at least 90% by weight, still more preferably at least 98% by weight, still more preferably at least 99%by weight and most preferably all of the lactide contained in the polymerization composition is from the purified meso-lactide depleted composition, i.e. that all or a portion of the purified meso-lactide enriched composition produced in step d), but none of the purified meso-lactide depleted composition produced in step e) is included in the polymerization composition. The polymerization reaction may comprise all of the purified meso-lactide enriched composition produced in step d) or a portion of the purified meso-lactide enriched composition produced in step d), such as 10 to 60% by weight thereof.

In accordance with a third particular preferred embodiment of the present invention, in step d) the meso-lactide enriched composition (i.e. without being in admixture with a portion of the composition containing unreacted lactide obtained in the optional devolatilization step) is subjected to a purification comprising at least one crystallization step so as to produce a purified meso-lactide enriched composition, wherein in step e) a mixture of the meso-lactide depleted composition and a portion of the composition containing unreacted lactide is subjected to a purification comprising at least one crystallization step so as to produce a purified meso-lactide depleted composition, and wherein the polymerization composition contains at least a portion the purified meso-lactide enriched composition produced in step d) and at least a portion the purified meso-lactide depleted composition produced in step e). Preferably, polymerization composition does not contain more than 20% by weight, more preferably not more than 10% by weight, even more preferably not more than 2% by weight, still more preferably not more than 1% by weight and most preferably no further lactide in addition to that resulting from the purified meso-lactide enriched composition and that from the purified meso-lactide depleted composition. The ratio of the purified meso-lactide enriched composition and of the purified meso-lactide depleted composition in the polymerization composition may be 10:1 to 1:10 by weight, such as 5:1 to 1:1 by weight. The polymerization reaction may comprise all of the purified meso-lactide enriched composition produced in step d) or a portion of the purified meso-lactide enriched composition produced in step d), such as 10 to 60% by weight thereof. Likewise thereto, the polymerization reaction may comprise all of the purified meso-lactide depleted composition produced in step d) or a portion of the purified meso-lactide depleted composition produced in step d), such as 10 to 60% by weight thereof.

In accordance with a fourth particular preferred embodiment of the present invention, in step d) a mixture of the meso-lactide enriched composition and of a portion of the composition containing unreacted lactide produced in the devolatilization is subjected to a purification comprising at least one crystallization step so as to produce the purified meso-lactide enriched composition, wherein in step e) a mixture of the meso-lactide depleted composition and a portion of the composition containing unreacted lactide is subjected to a purification comprising at least one crystallization step so as to produce a purified meso-lactide depleted composition, and wherein the polymerization composition contains at least a portion the purified meso-lactide enriched composition produced in step d) and at least a portion the purified meso-lactide depleted composition produced in step e). Preferably, polymerization composition does not contain more than 20% by weight, more preferably not more than 10% by weight, even more preferably not more than 2% by weight, still more preferably not more than 1% by weight and most preferably no further lactide in addition to that resulting from the purified meso-lactide enriched composition and that from the purified meso-lactide depleted composition. The ratio of the purified meso-lactide enriched composition and of the purified meso-lactide depleted composition in the polymerization composition may be 10:1 to 1:10 by weight, such as 5:1 to 1:1 by weight. The polymerization reaction may comprise all of the purified meso-lactide enriched composition produced in step d) or a portion of the purified meso-lactide enriched composition produced in step d), such as 10 to 60% by weight thereof. Likewise thereto, the polymerization reaction may comprise all of the purified meso-lactide depleted composition produced in step d) or a portion of the purified meso-lactide depleted composition produced in step d), such as 10 to 60% by weight thereof.

Also for all other possible embodiments in addition to the specific preferred embodiments described above, the polymerization composition contains i) at least a portion of the purified meso-lactide enriched composition produced in step d) and/or at least a portion of the purified meso-lactide depleted composition produced in step e). Moreover, also for all other possible embodiments the polymerization composition may contain a mixture of i) at least a portion of the purified meso-lactide enriched composition produced in step d) and/or at least a portion of the purified meso-lactide depleted composition produced in step e) and ii) and at least a portion of the composition containing unreacted lactide. For instance, the polymerization composition contains at least a portion of the purified meso-lactide enriched composition produced in step d), at least a portion the purified meso-lactide depleted composition produced in step e) and at least a portion of the composition containing unreacted lactide.

As set out above, the polymerization composition used in step c) preferably contains at least one catalyst for the ring opening reaction of lactide to polylactic acid. In principle, the present invention is not particularly limited concerning the chemical nature of the used catalyst. In particular, good results are obtained, if the catalyst is at least one organometallic compound. Good results are in particular obtained, when the catalyst is at least one organometallic compound comprising a metal selected from the group consisting of magnesium, titanium, zinc, aluminum, indium, yttrium, tin, lead, antimony, bismuth and any combination of two or more of the aforementioned metals. The at least one organometallic compound preferably comprises as organic residue a residue selected from the group consisting of alkyl groups, aryl groups, halides, oxides, alkanoates, alkoxides and any combination of two or more of the aforementioned groups. More preferably, the catalyst is at least one organometallic compound comprising as metal aluminum and/or tin. Still more preferably, the catalyst is at least one organometallic compound being selected from the group consisting of tin octoate, tetraphenyl tin, butyltin trimethoxide, dibutyltin oxide, aluminum isopropoxide, Al(O-i-Pr)ₚ with 1≤p≤3, Et₃-pAl(O(CH₂)₂X)ₚ with 1≤p≤3, α, β, y, δ, ε tetraphenylporphinato aluminium (TPPIAIX) and any combination of two or more of the aforementioned compounds. Particularly suitable as catalyst is tin octoate, such as tin(II) 2-ethylhexanoate.

Preferably, the catalyst content in the polymerization composition is 10 to 10,000 ppm and more preferably 50 to 1,000 ppm.

In accordance with a further particularly preferred embodiment of the present invention, the polymerization composition used in step c) contains at least one initiator and more preferably together with the aforementioned at least one catalyst. The at least one initiator is preferably a hydroxy compound and more preferably a hydroxy compound being selected from the group consisting of monohydroxy compounds, dihydroxy compounds, trihydroxy compounds, tetrahydroxy compounds and any combination of two or more of the aforementioned compounds. By the functionality of the at least one hydroxy compound, the design of the resulting copolymer can be adjusted. If a monohydroxy compound is used, a linear copolymer will be produced, whereas branched copolymers may be produced by using one or more dihydroxy compounds, trihydroxy compounds and/or tetrahydroxy compounds. Good results are in particular obtained, when the at least one initiator is selected from the group consisting of 2-ethyl hexanol, 1-decanol, C₁₀₋C₂₀-monohydroxy fatty alcohols, benzyl alcohol, p-phenylbenzyl alcohol, ethylene glycol, propylene glycol, butane-1,4-diol, poly(ethylene glycol) with a weight average molecular weight of 200 to 10,000 g/mol, 2-hydroxymethyl-1,3-propane, glycerol, polyglycerol with a weight average molecular weight of 100 to 1,000 g/mol, trihydroxybenzene (phloroglucinol), trimethylolpropane and its dimer, pentaerythritol and its dimers and any combination of two or more of the aforementioned compounds.

Preferably, the initiator content in the polymerization composition is 0.1 to 50 meq or less than 0.1 to 50 mmol/kg, respectively, and more preferably 0.5 to 40 meq or mmol/kg, respectively.

In accordance with the present invention, the purification conducted in step d) for producing the purified meso-lactide enriched composition comprises at least one crystallization step. In principle, the present invention is not particularly limited concerning the kind of crystallization used in step d). Thus, the crystallization step may be any melt crystallization step, such as a static crystallization step or a dynamic crystallization step, such as a falling film crystallization step or a suspension crystallization step. The term "melt crystallization" is known to those skilled in the art and is described in detail, for example, in G.F. Arkenbout, Melt Crystallization Technology, Lancaster/Pa., Technomic Publ. Co., 1995. In the context of the present invention, this should be understood to mean a crystallization which is performed from the melt, i.e. with an already molten starting material without addition of further components, such as for examples solvents. The melt crystallization may be performed in the form of a layer crystallization or in the form of a suspension crystallization. To perform a layer crystallization a cooled surface is typically introduced into the melt of the optically active or inactive lactide used as starting material. Thereafter, a crystal layer of enantiomerically enriched or unenriched lactide crystals forms on the cooled surface and may then be separated from the remaining melt. The crystalline enriched lactide thus obtained may be molten again. Subsequently, this operation may be repeated as often as desired to increase the purity and the yield. Good results are, however, in particular obtained when the purification performed in step d) comprises at least one static crystallization step. Static crystallization has the advantage that it economically purifies compounds, which are contained in the crystallization liquid is comparable high amounts. During the static crystallization, the liquid phase is not moved and thus the crystals are formed and grown in a static liquid phase. More specifically, a typical static crystallizer comprises a plurality of walls, such as plates, or tubes or finned tubes which can be cooled and heated by circulating a heat transfer medium through the interior of the plates. At the beginning, the static crystallizer is filled with liquid feed mixture, i.e. with the meso-lactide enriched composition or a mixture of the meso-lactide enriched composition and a portion of the composition containing unreacted lactide so that the plates contact the liquid feed mixture. Then, the plates of the static crystallization vessel are cooled to a temperature below the equilibrium freezing temperature of the liquid feed mixture so that crystals enriched in meso-lactide are formed and deposited on the cooled outer surfaces of the plates. After completion of the crystallization, the liquid mixture is completely removed from the static crystallization vessel, the cooling of the plates is terminated and optionally the plates are heated so that the crystal layers formed on the outer surfaces of the plates melt, before the melt is removed from the crystallization vessel in order to obtain the purified meso-lactide enriched composition. In order to increase the purity of the meso-lactide the crystal layers may be sweated by gently heating them to a temperature close to the melting temperature of the meso-lactide in order to partially melt the crystals, before melting them.

Typically, the meso-lactide enriched composition is obtained in the separation step b) as overheads vapor composition of a distillation column. If so, the meso-lactide enriched composition is preferably condensed, before being fed as liquid composition into the at least one crystallization step.

Also concerning the kind of crystallization used in step e), the present invention is not particularly limited. More specifically, the crystallization step may be any melt crystallization step, such as a static crystallization step or a dynamic crystallization step, such as a falling film crystallization step or a suspension crystallization step. Good results are, however, in particular obtained when the purification performed in step e) comprises at least one dynamic crystallization step and more preferably at least one falling film crystallization step. In contrast to static crystallization, the liquid phase is not moved or agitated during the dynamic crystallization. Dynamic crystallization and in particular falling film crystallization has the advantage that it economically purifies compounds, which are contained in the crystallization liquid in comparable low amounts.

Preferably, the at least one dynamic crystallization step preferably comprises one to four dynamic crystallization stages and more preferably one dynamic crystallization stage. Particularly preferably, the at least one dynamic crystallization step comprises one to four falling film crystallization stages and most preferably one falling film crystallization stage.

Also regarding the kind of separation technique used in step b), the present invention is not particularly limited. Preferably, step b) comprises one or more distillation steps, wherein each of these distillation steps is performed in a distillation column, wherein the crude lactide composition is fed into the distillation column of the first distillation step, if more than one distillation steps are comprised, or into the distillation column of the one distillation step, if only one distillation steps is comprised. The meso-lactide enriched composition is produced as overheads fraction and the meso-lactide depleted composition is produced as bottom fraction or side fraction of the distillation column of the last distillation step, if more than one distillation steps are comprised, or into the distillation column of the one distillation step, if only one distillation steps is comprised.

In a further development of the idea of the present invention it is suggested that step b) comprises two distillation steps, each of which being performed in a distillation column, wherein the crude lactide composition is fed into the first distillation column, in which the crude lactide composition is preferably separated into an overheads fraction containing light compounds, into a bottom fraction containing heavy compounds and into a side fraction containing the meso-lactide. The meso-lactide rich side fraction of the first distillation column is fed into the second distillation column, in which the meso-lactide rich fraction is further purified. Preferably, the meso-lactide rich side fraction of the first distillation column is fed as side fraction into the second distillation column, in which the meso-lactide enriched composition is produced as overheads fraction and the meso-lactide depleted composition is produced as side fraction or as bottom fraction.

Preferably, a portion of the purified meso-lactide enriched composition produced in step d) is recycled as side stream into the last distillation column, if more than one distillations column are present, or into the distillation column, if only one distillation column is present.

As set out above, in step b) a meso-lactide enriched composition is produced, which contains less than 80 mol-% of meso-lactide based on the total content of lactide. Good results are in particular obtained, when the meso-lactide enriched composition contains 60 to 80% by weight and more preferably 70 to 80% by weight of meso-lactide. In addition, the meso-lactide enriched composition preferably contains 20 to 40% by weight and more preferably 20 to 30% by weight of sum of L-lactide and D-lactide.

Moreover, it is preferred that the meso-lactide depleted composition, which is produced in step b), contains more than 85 and more preferably more than 90 % by weight of L-lactide, less than 2% by weight and more preferably less than 0.5% by weight of D-lactide and less than 12% by weight and more preferably less than 5% by weight of meso-lactide.

In a further development of the idea of the present invention it is proposed that step a) comprises the steps of prepolymerizing lactic acid so as to produce a lactic acid oligomer and then of subjecting the lactic acid oligomer to a depolymerization reaction so as to obtain the crude lactide composition. For instance, the crude lactic acid composition, which is subjected to the prepolymerizing, contains more than 70% by weight and more preferably more than 80% by weight of lactic acid. More specifically, it is preferred that lactic acid part of the crude lactic acid composition (i.e. without the content of water and other impurities) comprises more than 97% by weight of L-lactic acid and 0.1 to 3% by weight of D-lactic acid, wherein the total content of L-lactic acid and of D-lactic acid of the lactic acid part of the crude lactic acid composition is preferably 97 to 99.9% by weight. Suitable catalysts for the depolymerization reaction are those being selected from the group consisting tin compounds, such as SnO, SnCl₂, Sn(octanoate)₂, tin (II) octoate, Sb₂O₃, H₂SO₄, Bu₂SnO, zinc oxide and arbitrary combinations of two or more of the aforementioned catalysts. The prepolymerization reaction is preferably performed at a temperature of 150 to 200°C, whereas the depolymerization reaction is preferably performed at a temperature of 190 to 240°C and at a pressure below 10 mbar.

According to a particular preferred embodiment of the present patent application, it is preferred that the polylactic acid produced during the polymerization has a number average molecular weight of at least 5,000 g/mol, preferably of at least 15,000 g/mol, more preferably of at least 25,000 g/mol, yet more preferably at least 35,000 g/mol and most preferably at least 45,000 g/mol. The upper limit for the number average molecular weight of the polylactic acid produced during the ring-opening-polymerization is preferably 110,000 g/mol, but may be also 90,000 g/mol or 80,000 g/mol. Suitable ranges for the number average molecular weight of the polylactic acid produced during the ring-opening-polymerization may be for instance 10,000 to 20,000 g/mol, 20,000 to 30,000 g/mol, 30,000 to 50,000 g/mol or 50,000 to 80,000 g/mol.

In accordance with the present invention, the number- and weight-average molecular weight (Mₙ and M_{w}) of polymers is determined by gel permeation chromatography using a poly(methyl methacrylate) standard and a sample concentration of 1 to 5 mg/ml in 1ml HFIP depending on the sample's molecular weight, wherein the column temperature is 40 °C, the temperature of the RI-Detector (refractive index) is 40 °C and the flow rate 1 ml/min. As instrument, (GPC Viscotek TDA max from Malvern Panalytical, UK equipped with a Viscotek VE 2001 solvent/sample module, a precolumn HFIP guard (50 mm length and 8 mm internal diameter), two columns (Viscotek HFIP6000M and HFIP3000, Viscotek, Switzerland; 300 mm length and 8 mm internal diameter), and a triple detector Viscotek TDA 305 (RI, UV and viscosimeter) may be used. The calibration curve may be constructed using poly(methylmethacrylate) (PMMA) standard (Mn, max = 50,352 g/mol and Ð of 1.023).

The polydispersity index, i.e. the ratio of Mw/Mn, of the polylactic acid produced during the ring-opening-polymerization may be preferably 1 to 3, more preferably 1 to 2 and most preferably 1 to 1.5.

In a further development of the idea of the present invention it is suggested that the polylactic acid produced during the ring-opening-polymerization has a yellowness index below 40, preferably below 30, more preferably below 15, even preferably below 10, yet more preferably below 5 and most preferably less than 3. The yellowness index is measured in accordance with the present invention in accordance with ASTM E313.

It is preferred that after the polymerization ring-opening-polymerization the non-reacted lactide remaining in the polymerization product is removed to a final concentration of preferably less than at least 0.5 % by weight and more preferably less than 0.3 % by weight, in order to obtain a product of marketable quality. As set out above, such a removal of unreacted lactide is preferably achieved by means of at least one devolatilization step conducted at elevated temperature e.g. between 190 and 230°C and at a reduced pressure of e.g. below 5 mbar (absolute). For example, a two-stage devolatilization process may be performed, in order to obtain the required degree of lactide removal and thus to obtain a polymer having the required quality. In order to stop the polymerization reaction, an inhibitor is preferably added to the polymer product at the end of the polymerization and before or after the first devolatilization step. In order to maximize the yield of polymer product per amount of lactide feed, it is further preferred that the unreacted lactide is recovered after the devolatilization e.g. by condensation, then optionally the condensed composition containing unreacted lactide is recycled into the meso-lactide enriched composition and/or into the meso-lactide depleted composition and/or separately into the polymerization composition. In particular, the addition of one or more efficient inhibitor additives at the end of the polymerization reaction is preferred for an efficient devolatilization. Before the first devolatilization step, between the first and second devolatilization step or after the second devolatilization step additives and/or other polymers may be mixed and/or blended in one or more units for mixing and/or blending additives into the product stream in order to improve the mechanical, rheological and/or thermal properties of the final polymer product.

Moreover, the final polymer product stream may be cooled in a cooler and then pressed through a granulator or pelletizer, respectively, or through another forming unit.

In accordance with a further aspect, the present invention relates to a plant for producing polylactic acid, wherein the plant comprises:
i) a separation unit comprising an inlet line for crude lactide composition, an outlet line for a meso-lactide enriched composition and an outlet line for a meso-lactide depleted composition,
ii) a crystallization unit comprising an inlet line for the meso-lactide enriched composition or a mixture of the meso-lactide enriched composition and a portion of a composition containing unreacted lactide and comprising an outlet line for purified meso-lactide enriched composition,
iii) a crystallization unit comprising an inlet line for the meso-lactide depleted composition or a mixture of the meso-lactide depleted composition and a portion of a composition containing unreacted lactide and comprising an outlet line for purified meso-lactide depleted composition, and
iv) a polymerization reactor comprising an inlet line for a polymerization composition and an outlet line for crude polylactic acid composition and optionally further comprising a devolatilization unit comprising an inlet line for the crude polylactic acid composition, an outlet line for purified polylactic acid composition and an outlet line for a composition containing unreacted lactide,
wherein the outlet line for purified meso-lactide enriched composition of the crystallization unit ii) and/or the outlet line for purified meso-lactide depleted composition of the crystallization unit iii) is/are connected with the inlet line of the polymerization reactor.

In accordance with a particular preferred embodiment of the present invention, the outlet line for the meso-lactide enriched composition of the separation unit leads directly into the inlet line for the meso-lactide enriched composition of the crystallization unit ii), wherein the outlet line for the meso-lactide depleted composition of the separation unit leads directly into the inlet line for the meso-lactide depleted composition of the crystallization unit iii), wherein the outlet line for purified meso-lactide enriched composition of the crystallization unit ii) is connected with the inlet line of the polymerization reactor and wherein the outlet line for purified meso-lactide depleted composition of the crystallization unit iii) is connected with the inlet line of the polymerization reactor. Alternatively, the outlet line for purified meso-lactide enriched composition of the crystallization unit ii) and the outlet line for purified meso-lactide depleted composition of the crystallization unit iii) combine with each other and the combined line is connected with the inlet line of the polymerization reactor.

In accordance with an alternative particular preferred embodiment of the present invention, the inlet line for the meso-lactide enriched composition of the crystallization unit ii) is connected with the outlet line for the meso-lactide enriched composition of the separation unit and with the outlet line for the composition containing unreacted lactide of the devolatilization unit, wherein the outlet line for the meso-lactide depleted composition of the separation unit leads directly into the inlet line for the meso-lactide depleted composition of the crystallization unit iii), and wherein the outlet line for purified meso-lactide enriched composition of the crystallization unit ii) is connected with the inlet line of the polymerization reactor.

In a further development of the idea of the present invention it is suggested that the crystallization unit ii) comprises at least one dynamic crystallizer, preferably one to four dynamic crystallizers and more preferably one dynamic crystallizer. Preferably, the at least one dynamic crystallizer, i.e. the preferred one to four dynamic crystallizers or the more preferred one dynamic crystallizer is/are falling film crystallizer(s).

In accordance with a further preferred embodiment of the present invention, the plant further comprises two distillation columns, wherein the upstream of the two distillation columns comprises the inlet line for crude lactide composition, an overheads outlet line, a bottom outlet line and a side outlet line, wherein the side outlet line of the upstream of the two distillation columns is connected with a side inlet line of the downstream of the two distillation columns, wherein the downstream of the two distillation columns further comprises an overheads outlet line, a bottom outlet line and a side outlet line, wherein the overheads outlet line of the downstream of the two distillation columns is connected with the inlet line of the crystallization unit ii), and wherein the side outlet line of the downstream of the two distillation columns is connected with the inlet line of the crystallization unit iii).

In addition, it is preferred that the plant further comprises an prepolymerization reactor comprising an inlet line for lactic acid and an outlet line for lactic acid oligomer, and wherein the plant further comprises a depolymerization reactor comprising an inlet line, which is connected with the outlet line for lactic acid oligomer of the prepolymerization reactor, and an outlet line for crude lactide composition, which is connected with the inlet line of the separation unit.

Preferably, the outlet line for crude lactide composition is connected with the inlet line for crude lactide composition of the upstream of the two distillation columns.

Subsequently, the present invention is described by means of illustrative, but not limiting figures, in which:
- Fig. 1: shows a schematic view of the plant for of producing polylactic acid in accordance with one embodiment of the present invention.
- Fig. 2: shows a detailed schematic view of the static crystallizer used for purifying the meso-lactide enriched composition of the plant shown in figure 1.
- Fig. 3: shows a schematic view of the plant for of producing polylactic acid in accordance with another embodiment of the present invention.
- Fig. 4: shows a detailed schematic view of the static crystallizer used for purifying the meso-lactide enriched composition of the plant shown in figure 3.

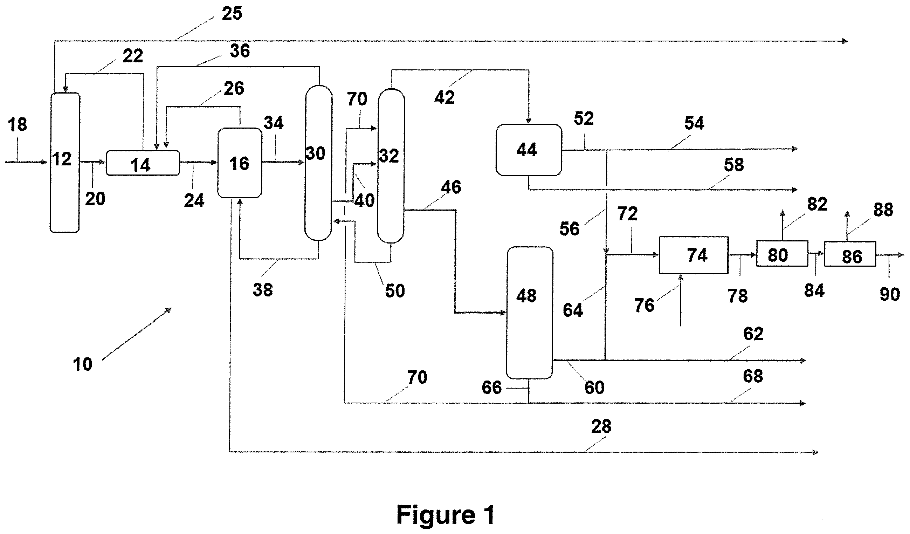

The plant 10 shown in figure 1 comprises, in series, a dewatering unit 12, a prepolymerization reactor 14 and a depolymerization reactor 16, wherein the dewatering unit 12 comprises an inlet line 18 for lactid acid. One outlet of the dewatering unit 12 is connected with the inlet of the prepolymerization reactor 14 by line 20, whereas the prepolymerization reactor 14 is further connected via the return line 22 with the dewatering unit 12 and via line 24 with the inlet of the depolymerization reactor 16. Moreover, the dewatering unit 12 comprises a water outlet line 25. In turn, the depolymerization reactor 16 is connected via the return line 26 with the prepolymerization reactor 14 and further comprises a purge line 28. Downstream of the depolymerization reactor 16, two distillation columns 30, 32 are provided, wherein the outlet of the depolymerization reactor 16 is connected with the inlet of the first distillation column 30 via line 34, the first distillation column 30 is connected via a return line 36 with the prepolymerization reactor 14, via a return line 38 with the depolymerization reactor 16 and via line 40 with the second distillation column 32. The second distillation column 32 comprises at its overhead a line 42 being connected with a static crystallizer 44, at its side a line 46 being connected with a falling film crystallizer 48 and at its bottom a return line 50, which is connected with the first distillation column 30. The static crystallizer 44 comprises an outlet line 52, which splits into the product line 54 and the connection line 56. In addition, the static crystallizer 44 comprises a purge line 58. In turn, the falling film crystallizer 48 comprises a first outlet line 60, which splits into the product line 62 and the connection line 64, as well as a second outlet line 66, which splits into a purge line 68 and into a return line 70, which leads into the second distillation column 30. Connection lines 56 and 64 combine into the monomer inlet line 72, which leads into the polylactic acid reactor 74. Also, an inlet line 76 for catalyst and initiator leads into the polylactic acid reactor 74. The polylactic acid reactor 74 further comprises an outlet line 78, which leads into a first devolatilizer 80. The first devolatilizer 80 comprises a vapor outlet line 82 and a melt outlet line 84 leading into a second devolatilizer 86, which comprises a vapor outlet line 88 and a polylactic acid outlet line 90.

During the operation of the plant 10, lactic acid is continuously fed via the inlet line 18 into the dewatering unit 12, in which the lactic acid is dewatered. Dewatered lactic acid is led via line 20 into the prepolymerization reactor 14, in which the lactic acid is prepolymerized so as to produce a lactic acid oligomer, whereas the water having been separated from the lactic acid in the dewatering unit 12 is withdrawn therefrom through line 25. The lactic acid oligomer is led via line 24 into the depolymerization reactor 16, in which the lactic acid oligomer is depolymerized into a lactide mixture, which typically comprises meso-lactide, L-lactide and D-lactide. While residual lactic acid is recycled via line 26 into the prepolymerization reactor 14 and purge stream is withdrawn from the depolymerization reactor 16 via line 28, the lactide mixture is led via line 34 from the depolymerization reactor 16 into the first distillation column 30. In the first distillation column 30, lights are separated from the lactides as overheads stream and are returned via line 36 into the prepolymerization reactor 14, whereas remaining lactic acid oligomers are returned as bottom stream via line 38 into the depolymerization reactor 16 and the pre-purified lactide stream is led as side stream of the first distillation column 30 via line 40 into the second distillation column 32. The pre-purified lactide stream is separated in the second distillation column 32 into an overheads stream and into a bottom stream, wherein the overheads stream is the meso-lactide enriched composition and the bottom stream is the meso-lactide depleted composition. While the meso-lactide enriched composition is fed via line 42 into the static crystallizer 44, the meso-lactide depleted composition is fed via line 46 into the falling film crystallizer 48. Purified meso-lactide enriched composition is withdrawn from the static crystallizer 44 via line 52, whereas the residue is withdrawn via purge line 58 as purge stream. Likewise thereto, purified meso-lactide depleted composition is withdrawn from the falling film crystallizer 48 via line 60, whereas the residue is withdrawn via line 66 and is split into a recycle stream being fed into the second distillation column 32 via return line 70 and into a purge stream being withdrawn via purge line 68. The purified meso-lactide enriched composition is split into a portion being withdrawn as purified meso-lactide from the plant 10 via product line 54 as well as into a portion being fed via lines 56 and 72 into the polylactic acid reactor 74, whereas the purified meso-lactide depleted composition is split into a portion being withdrawn as purified L-lactide from the plant 10 via product line 62 as well as into a portion being fed via lines 56 and 72 into the polylactic acid reactor 74. The lactide is polymerized in the polylactic acid reactor 74 in the presence of catalyst and initiator, which is fed into the polylactic acid reactor 74 via inlet line 76, to polylactic acid. The crude polylactic acid stream is fed via line 78 into a first devolatilizer 80, in which it is separated into a polylactic melt stream as well as into a vapour stream comprising unreacted lactide as well as traces of catalyst and initiator. While the vapor fraction is withdrawn from the first devolatilizer 80 via line 82, the polylactic melt stream is fed via line 84 into the second devolatilizer 86, in which it is separated into a vapour stream comprising unreacted lactide as well as traces of catalyst and initiator being withdrawn from the second devolatilizer 86 via line 88 as well as into purified polylactic acid, which is withdrawn from the plant 10 via line 90.

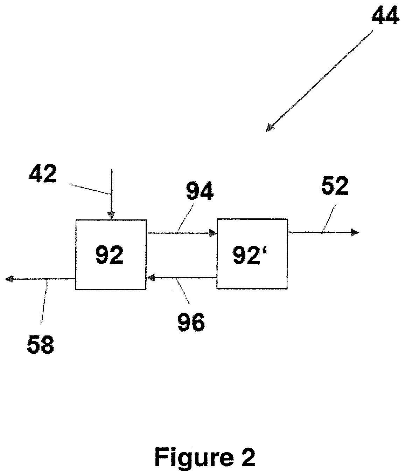

Figure 2 shows schematically the two stages of the static crystallizer 44 of the plant 10 shown in figure 1. The static crystallizer 44 comprises a first static crystallization stage 92 and a second static crystallization stage 92'. The meso-lactide enriched composition is fed via line 42 into the first static crystallization stage 92 of the static crystallizer 44 and crystallized therein. During the crystallization, meso-lactide crystallizes on the cooled surface of the first crystallization stage 92, whereas a meso-lactide depleted mother liquor remains. After termination of the crystallization, the mother liquor is discharged as purge via purge line 58 from the first crystallization stage 92, whereas the crystal layer of meso-lactide deposited during the first crystallization stage 92 is subjected to a sweating step, wherein the sweating fraction (not shown) obtained thereby is added to the purge stream being discharged via purge line 58. Afterwards, the crystal layer is molten so as to obtain a first crystallized fraction of the purified meso-lactide composition. The first crystallized fraction of the purified meso-lactide composition is led via line 94 to the second crystallization stage 92', in which it is crystallized. During the crystallization, meso-lactide crystallizes on the cooled surface of the second crystallization stage 92', whereas a meso-lactide depleted mother liquor remains. After termination of the crystallization in the second crystallization stage 92', the mother liquor is discharged and is fed via line 96 into the first crystallization stage 92. Thereafter, the crystal layer deposited in second crystallization stage 92' is subjected to a sweating step, whereafter the crystal layer deposited in the second crystallization stage 92' is molten so as to obtain the purified meso-lactide enriched stream, which is withdrawn from the static crystallizer 44 via the outlet line 52.

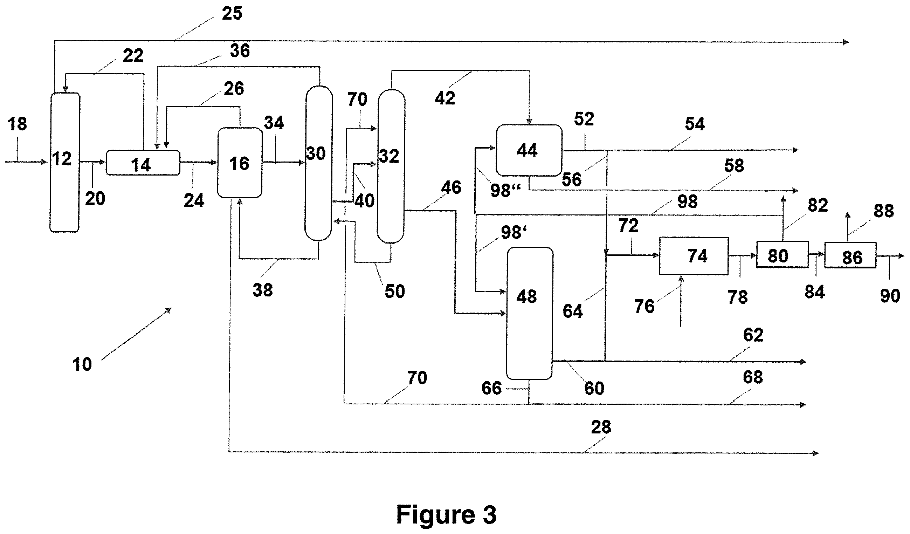

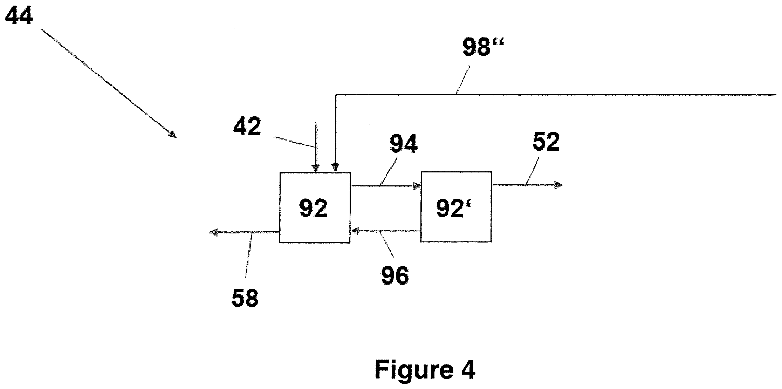

The plant 10 and static crystallizer 44 shown in figures 3 and 4 correspond to those of figures 1 and 2 except that in the plant 10 shown in figure 3 recycle lines 98, 98' and 98" are provided. More specifically, from the vapor outlet line 82 of the first devolatilizer 80 a recycle line 98 branches off, which in turn splits into recycle lines 98, 98' and 98". While recycle line 98' leads into the falling film crystallizer 48, the recycle line 98" leads into the static crystallizer 44. In this embodiment, unreacted lactide from the first devolatilizer 80 is re-used in the polymerization step conducted in the polylactic acid reactor 74. Via the recycle lines 98, 98' and 98" arbitrary portions of the vapour stream being withdrawn from the first devolatilizer 80 via line 82 may be recycled into the static crystallizer 44 and/or the falling film crystallizer 48.

### Reference numerals

- 10: Plant
- 12: Dewatering unit
- 14: Prepolymerization reactor
- 16: Depolymerization reactor
- 18: Inlet line for lactid acid
- 20: Line
- 22: Return line
- 24: Line
- 25: Water outlet line
- 26: Return line
- 28: Purge line
- 30: (First) distillation column
- 32: (Second) distillation column
- 34: Line
- 36: Return line
- 38: Return line
- 40: Line
- 42: Line
- 44: Static crystallizer
- 46: Line
- 48: Falling film crystallizer
- 50: Return line
- 52: Outlet line
- 54: Product line
- 56: Connection line
- 58: Purge line
- 60: Outlet line
- 62: Product line
- 64: Connection line
- 66: Outlet line
- 68: Purge line
- 70: Return line
- 72: Monomer inlet line
- 74: Polylactic acid reactor
- 76: Inlet line
- 78: Outlet line
- 80: First devolatilizer
- 82: Vapor outlet line
- 84: Melt outlet line
- 86: Second devolatilizer
- 88: Vapor outlet line
- 90: Polylactic acid outlet line
- 92: First static crystallization stage
- 92': Second static crystallization stage
- 94: Line
- 96: Line
- 98, 98', 98": Recycle line from devolatilization

## Claims

1. A process of producing polylactic acid comprising the steps of:
a) providing a crude lactide composition comprising meso-lactide and at least one of L-lactide and D-lactide,
b) separating from the crude lactide composition a meso-lactide enriched composition and a meso-lactide depleted composition, wherein the meso-lactide enriched composition contains less than 80 mol-% of meso-lactide based on the total content of lactide,
c) polymerizing a polymerization composition comprising meso-lactide and at least one of L-lactide and D-lactide to a crude polylactic acid composition and optionally devolatilizing the crude polylactic acid composition so as to produce a purified polylactic acid composition and a composition containing unreacted lactide,
d) subjecting the meso-lactide enriched composition or a mixture of the meso-lactide enriched composition and a portion of the composition containing unreacted lactide to a purification comprising at least one crystallization step so as to produce a purified meso-lactide enriched composition,
e) subjecting the meso-lactide depleted composition or a mixture of the meso-lactide depleted composition and a portion of the composition containing unreacted lactide to a purification comprising at least one crystallization step so as to produce a purified meso-lactide depleted composition,
wherein the polymerization composition contains at least a portion of the purified meso-lactide enriched composition produced in step d) and/or at least a portion of the purified meso-lactide depleted composition produced in step e).

2. The process in accordance with claim 1, wherein in step d) the meso-lactide enriched composition is subjected to a purification comprising at least one crystallization step so as to produce a purified meso-lactide enriched composition, wherein in step e) the meso-lactide depleted composition is subjected to a purification comprising at least one crystallization step so as to produce the purified meso-lactide depleted composition, and wherein the polymerization composition contains at least a portion the purified meso-lactide enriched composition produced in step d) and at least a portion the purified meso-lactide depleted composition produced in step e).

3. The process in accordance with claim 1, wherein in step d) a mixture of the meso-lactide enriched composition and a portion of the composition containing unreacted lactide is subjected to a purification comprising at least one crystallization step so as to produce the purified meso-lactide enriched composition, wherein in step e) the meso-lactide depleted composition is subjected to a purification comprising at least one crystallization step so as to produce a purified meso-lactide depleted composition, and wherein the polymerization composition contains at least a portion of the purified meso-lactide enriched composition.

4. The process in accordance with claim 1, wherein in step d) the meso-lactide enriched composition is subjected to a purification comprising at least one crystallization step so as to produce a purified meso-lactide enriched composition, wherein in step e) a mixture of the meso-lactide depleted composition and a portion of the composition containing unreacted lactide is subjected to a purification comprising at least one crystallization step so as to produce a purified meso-lactide depleted composition, and wherein the polymerization composition contains at least a portion the purified meso-lactide enriched composition produced in step d) and at least a portion the purified meso-lactide depleted composition produced in step e).

5. The process in accordance with any of the preceding claims, wherein the polymerization composition contains i) at least a portion of the purified meso-lactide enriched composition produced in step d) and/or at least a portion of the purified meso-lactide depleted composition produced in step e) and ii) and at least a portion of the composition containing unreacted lactide.

6. The process in accordance with claim 5, wherein the polymerization composition contains at least a portion of the purified meso-lactide enriched composition produced in step d), at least a portion the purified meso-lactide depleted composition produced in step e) and at least a portion of the composition containing unreacted lactide.

7. The process in accordance with any of the preceding claims, wherein the polymerization composition contains at least one catalyst and/or at least one initiator, wherein the catalyst is preferably at least one organometallic compound comprising as metal aluminum or tin and wherein the catalyst is more preferably at least one organometallic compound selected from the group consisting of tin octoate, tetraphenyl tin, butyltin trimethoxide, dibutylin oxide, aluminum isopropoxide, Al(O-i-Pr)ₚ with 1≤p≤3, Et₃-pAl(O(CH₂)₂X)ₚ with 1≤p≤3, α, β, y, δ, ε tetraphenylporphinato aluminium (TPPIAIX) and any combination of two or more of the aforementioned compounds, and wherein at least one initiator is preferably selected from the group consisting of monohydroxy compounds, dihydroxy compounds, trihydroxy compounds, tetrahydroxy compounds and any combination of two or more of the aforementioned compounds and more preferably the at least one initiator is selected from the group consisting 2-ethyl hexanol, C₁₀₋C₂₀-monohydroxy fatty alcohols, benzyl alcohol, p-phenylbenzyl alcohol, ethylene glycol, propylene glycol, butane-1,4-diol, polyethylene glycol with a weight average molecular weight of 200 to 10,000 g/mol, 2-hydroxymethyl-1,3-propane, glycerol, polyglycerol with a weight average molecular weight of 100 to 1,000 g/mol, trihydroxybenzene, trimethylolpropane and its dimers, pentaerythritol and their dimers and any combination of two or more of the aforementioned compounds.

8. The process in accordance with any of the preceding claims, wherein the purification of step d) comprises at least one static crystallization step, wherein the at least one static crystallization step preferably comprises one to four static crystallization stages and more preferably 2 static crystallization stages.

9. The process in accordance with any of the preceding claims, wherein the purification of step e) comprises at least one dynamic crystallization step, wherein the at least one dynamic crystallization step preferably comprises one to four dynamic crystallization stages and more preferably one dynamic crystallization stage, wherein the dynamic crystallization is preferably a falling film crystallization.

10. The process in accordance with any of the preceding claims, wherein step b) comprises at least one distillation step each of which being performed in a distillation column (30, 32), wherein the crude lactide composition is fed into the distillation column (30, 32) of the first distillation step, and wherein the meso-lactide enriched composition is produced as overheads fraction and the meso-lactide depleted composition is produced as bottom fraction or side fraction of the distillation column (30, 32) of the last distillation step.

11. The process in accordance with claim 10, wherein step b) comprises two distillation steps each of which being performed in a distillation column (30, 32), wherein in the first distillation column(30, 32) the crude lactide composition is separated into an overheads fraction, into a bottom fraction and into a side fraction, wherein the side fraction of the first distillation column (30, 32) is fed as side fraction into the second distillation column (30, 32), in which the meso-lactide enriched composition is produced as overheads fraction and the meso-lactide depleted composition is produced as side fraction or as bottom fraction.

12. The process in accordance with claim 10 or 11, wherein a portion purified meso-lactide enriched composition produced in step d) is recycled as side stream into the last distillation column (30, 32).

13. A plant (10) for producing polylactic acid, wherein the plant (10) comprises:
i) a separation unit comprising an inlet line (10) for crude lactide composition, an outlet line (42) for a meso-lactide enriched composition and an outlet line (46) for a meso-lactide depleted composition,
ii) a crystallization unit (44) comprising an inlet line (42) for the meso-lactide enriched composition or a mixture of the meso-lactide enriched composition and a portion of a composition containing unreacted lactide and comprising an outlet line (52) for purified meso-lactide enriched composition,
iii) a crystallization unit (48) comprising an inlet line (46) for the meso-lactide depleted composition or a mixture of the meso-lactide depleted composition and a portion of a composition containing unreacted lactide and comprising an outlet line (60) for purified meso-lactide depleted composition, and
iv) a polymerization reactor (74) comprising an inlet line (72) for a polymerization composition and an outlet line (78) for crude polylactic acid composition and optionally further comprising a devolatilization unit comprising an inlet line (78) for the crude polylactic acid composition, an outlet line (90) for purified polylactic acid composition and an outlet line (82, 88) for a composition containing unreacted lactide,
wherein the outlet line for (52) purified meso-lactide enriched composition of the crystallization unit ii) (44) and/or the outlet line (60) for purified meso-lactide depleted composition of the crystallization unit iii) (48) is/are connected with the inlet line (72) of the polymerization reactor (74).

14. The plant (10) in accordance with claim 13, wherein:
i) the outlet line (42) for the meso-lactide enriched composition of the separation unit leads directly into the inlet line (42) for the meso-lactide enriched composition of the crystallization unit ii) (44), wherein the outlet line (46) for the meso-lactide depleted composition of the separation unit leads directly into the inlet line (46) for the meso-lactide depleted composition of the crystallization unit iii) (48), wherein the outlet line (52) for purified meso-lactide enriched composition of the crystallization unit ii) (44) is connected with the inlet line (72) of the polymerization reactor (74) and wherein the outlet line (60) for purified meso-lactide depleted composition of the crystallization unit iii) (48) is connected with the inlet line (72) of the polymerization reactor (74),
or
ii) the inlet line (42) for the meso-lactide enriched composition of the crystallization unit ii) (44) is connected with the outlet line for the meso-lactide enriched composition of the separation unit (42) and with the outlet line (82, 98") for the composition containing unreacted lactide of the devolatilization unit, wherein the outlet line (46) for the meso-lactide depleted composition of the separation unit leads directly into the inlet line (60) for the meso-lactide depleted composition of the crystallization unit iii) (48), and wherein the outlet line (52) for purified meso-lactide enriched composition of the crystallization unit ii) (44) is connected with the inlet line (72) of the polymerization reactor (74).

15. The plant (10) in accordance with claim 13 or 14, wherein the plant (10) further comprises two distillation columns (30, 32), wherein the upstream of the two distillation columns (30, 32) comprises the inlet line (34) for crude lactide composition, an overheads outlet line (36), a bottom outlet line (38) and a side outlet line (40), wherein the side outlet line (40) of the upstream of the two distillation columns (30) is connected with a side inlet line (40) of the downstream of the two distillation columns (32), wherein the downstream of the two distillation columns (32) further comprises an overheads (42) outlet line, a bottom outlet line (50) and a side outlet line (46), wherein the overheads outlet line (42) of the downstream of the two distillation columns (32) is connected with the inlet line (42) of the crystallization unit ii) (44), and wherein the side outlet line (46) of the downstream of the two distillation columns (32) is connected with the inlet line (46) of the crystallization unit iii) (48).
